# EUROPÄISCHE PATENTANMELDUNG

(11) **EP 1 403 523 A2**
(43) Veröffentlichungstag der Anmeldung: **31.03.2004**
(21) Anmeldenummer: 03019439.3
(22) Anmeldetag: 28.08.2003
(51) Int. Cl.: F15B 1/02, F16L 55/00, F15B 11/028, G05D 16/10

(54) **Vorrichtung zum Reduzieren und Vergleichmässigen des Drucks eines viskosen Mediums**

(30) Priorität: 24.09.2002 DE 10244705
(71) Anmelder: Gesellschaft für technische Entwicklungen mbH, 28832 Achim (DE)
(72) Erfinder: Zimmer, Albert, 28832 Achim (DE)
(74) Vertreter: Tönnies, Jan G., Dipl.-Ing.

(57) **Zusammenfassung**

Vorrichtung zum Reduzieren und Vergleichmäßigen des Drucks eines viskosen Mediums mit einem rohrförmigen Körper (1), der an einem Ende von einem ersten Flansch (2) und an seinem anderen Ende von einem zweiten Flansch (3) abgeschlossen ist und einen in dem rohrförmigen Körper (1) fliegend gelagerten Kolben (4), der auf der seiner einen Seite einen mit einem Präzisionsdruckregler (8) kommunizierenden Pneumatikraum (15) und auf seiner anderen Seite einen mit einem Einlass (12) und einem Auslass (13) kommunzierenden Medienraum (14) begrenzt, und eine in der Zuwegung zu dem Einlass (12) angeordnete, mit einem Stellantrieb (10) versehene Absperrarmatur (9), wobei der erste Flansch (2) mit einem ersten pneumatischen 2/3-Wegeventil (6) versehen ist, dessen Betätigungsstößel (7) in den Pneumatikraum (15) ragt und bei Betätigung durch den Kolben (4) ein Sperren der Absperrarmatur (9) bewirkt, und der zweite Flansch (3) mit einem zweiten pneumatischen 2/3-Wegeventil versehen ist, dessen Betätigungsstößel (7') in den Medienraum (14) ragt und bei Betätigung durch den Kolben (4) ein Öffnen der Sperrarmatur (9) bewirkt.

## Beschreibung

Die Erfindung betrifft eine Vorrichtung zum Reduzieren und Vergleichmäßigen des Drucks eines viskosen Mediums.

Es ist für viele Anwendungsfälle erwünscht, den Druck eines flüssigen oder viskosen Mediums zu reduzieren und zu vergleichmäßigen, insbesondere also Pumpenpulsationen aufzufangen, d.h. Druckspitzen zu glätten, damit ein kontinuierlicher Medienfluss beispielsweise zu nachgeschalteten Dosiereinrichtungen sichergestellt ist.

Eine solche Vorrichtung, die den hydraulischen Druck vergleichmäßigt und reduziert, ist aus der DE 42 16 780 bekannt. Diese Vorrichtung aber ist relativ komplex aufgebaut.

Der Erfindung liegt die Aufgabe zugrunde, eine Vorrichtung der eingangs genannten Art zu schaffen, die einfach und kompakt aufgebaut ist.

Erfindungsgemäß wird die Aufgabe der durch die Merkmale des einzigen Anspruchs gelöst.

Durch die Erfindung wird also eine Vorrichtung geschaffen, bei der unter hohem Druck, beispielsweise 160 bar, eintretendes Medium mit hoher Gleichmäßigkeit unter reduziertem Druck, beispielsweise 5 bar, zur Verfügung steht.

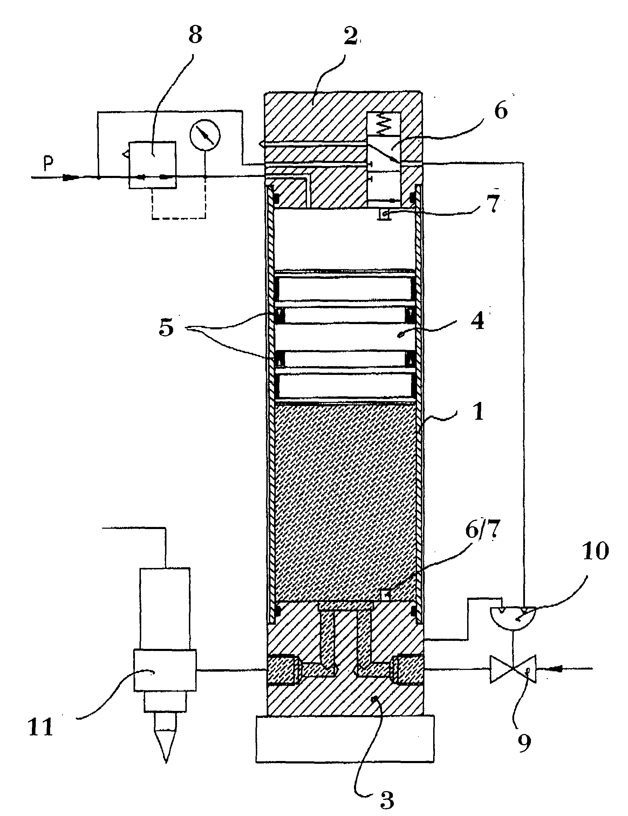

Die Erfindung wird im folgenden anhand einer Zeichnung erläutert, deren einzige Figur eine Schnittdarstellung durch eine solche Vorrichtung wiedergibt.

Die Vorrichtung besteht aus einem rohrförmigen Körper 1, der an einem Ende von einem ersten Flansch 2 und an seinem anderen Ende von einem zweiten Flansch 3 abgeschlossen ist. In dem rohrförmigen Körper 1 ist ein freibeweglicher Kolben 4 gelagert, der mit Dichtungen 5 versehen ist. Der Kolben 4 definiert einen Pneumatikraum 15, dessen gegenüberliegende Wandung durch den oberen Flansch 2 gebildet wird, der Kolben 4 begrenzt weiter einen mit dem Medium gefüllten Materialraum 14 , dessen gegenüberliegende Wandung durch den zweiten Flansch 3 gebildet wird.

Sowohl in dem ersten Flansch 2 als auch in dem zweiten Flansch 3 sind pneumatische 2/3-Wegeventile 6 eingebaut, deren Betätigungsstößel 7 in den Raum 15 bzw. in den Raum 14 hineinragen und von den Flächen des Kolbens 4 betätigt werden können.

Durch den ersten Flansch 2 ist eine Leitung zu dem Raum 15 geführt, an die ein Präzisionsdruckregler 8 für Druckluft angelegt ist.

Der andere Flansch ist mit einem Einlass 12 und einem Auslass 13 für das Medium, dessen Druck reduziert und vergleichmäßigt werden, versehen. Vor dem Einlass 12 liegt eine Absperrarmatur 9, die durch einen druckluftbetriebenen Schwenkantrieb oder Zylinder 10 geöffnet oder geschlossen werden kann.

Das durch die Armatur 9 zur Öffnung 12 einströmende Medium gelangt in den Raum 14 und treibt dabei den Kolben 4 nach oben. Dabei wird über den Kolben 4 eingespannte Luft 15, deren Druck am Präzisionsdruckregler 8 fest voreingestellt wird, über diesen Regler verdrängt, ohne dass sich die Höhe des Drucks ändert.

Während des Einströmens des Materials unterhalb des nach oben wandernden Kolbens 4 stellt sich der gleiche Druck wie oberhalb des Kolbens 4, also der am Präzisionsdruckregler 8 eingestellte Druck, ein.

Bevor der Kolben 4 die obere Endlage erreicht (was zu einem sprunghaften Anstieg des Drucks des Mediums führen würde) betätigt die obere Stirnfläche des Kolbens 4 den Betätigungsstößel 7 des 3/2-Wegeventils 6. Steuerluft gelangt durch die Leitung 16 zu dem Stellantrieb 10, dieser schließt die Armatur 9 sofort.

Das Medium in dem Raum 14 unter dem Kolben 4 ist mit dem Luftdruck in dem Raum 15 oberhalb des Kolbens 4 immer im Gleichgewicht.

Bei dem Öffnen des an den Auslass 13 in dem zweiten Flansch 3 angeschlossenen Dosierventils 11 wird Medium aus dem Raum 14 über das Dosierventil 11 von dem Kolben 4 hinausgedrängt, der sich an dem Auslass 13 einstellende Druck entspricht genau dem Druck des Präzisionsdruckreglers 8.

Bevor das Medium vollständig aus dem Raum 14 herausgedrückt ist, betätigt die untere Stirnfläche des Kolbens 4 den Betätigungsstößel 7' des 3/2-Wegeventils in dem unteren Flansch 3 (nicht dargestellt). Steuerluft gelangt durch die Leitung 17 durch das (nicht dargestellte) zweite 3/2-Wegeventil, zu dem Stellantrieb 10, der die Armatur 9 sofort wieder öffnet.

Dieses Wechselspiel Öffnen/Schließen der Armatur 9 beeinflusst die konstanten Niederdruckverhältnisse in dem rohrförmigen Körper 1 nicht, der Druck, mit dem das Medium aus dem Raum 14 in das Dosierventil 11 eintritt, ist absolut konstant.

## Patentansprüche

1. Vorrichtung zum Reduzieren und Vergleichmäßigen des Drucks eines viskosen Mediums, **gekennzeichnet durch**
einen rohrförmigen Körper (1), der an seinem einem Ende von einem ersten Flansch (2) und an seinem anderen Ende von einem zweiten Flansch (3) abgeschlossen ist,
einen in dem rohrförmigen Körper (1) fliegend gelagerten Kolben (4), der auf seiner einen Seite einen mit einem Präzisionsdruckregler (8) kommunizierenden Pneumatikraum (15) und auf seiner anderen Seite einen mit einem Einlass (12) und einem Auslass (13) kommunzierenden Materialraum (14) begrenzt, und
eine in der Zuwegung zu dem Einlass (12) angeordnete, mit einem Stellantrieb (10) versehene Absperrarmatur (9), wobei
der erste Flansch (2) mit einem ersten pneumatischen 2/3-Wegeventil (6) versehen ist, dessen Betätigungsstößel (7) in den Pneumatikraum (15) ragt und bei Betätigung **durch** den Kolben (4) ein Sperren der Absperrarmatur (9) bewirkt, und
der zweite Flansch (3) mit einem zweiten pneumatischen 2/3-Wegeventil versehen ist, dessen Betätigungsstößel (7') in den Materialraum (14) ragt und bei Betätigung **durch** den Kolben (4) ein Öffnen der Sperrarmatur (9) bewirkt.
